# EUROPEAN PATENT APPLICATION

(11) **EP 4 817 941 A1**
(43) Date of publication of application: **07.10.2026**
(21) Application number: 26169657.9
(22) Date of filing: 31.03.2026
(51) Int. Cl.: B60L 53/16, B60L 53/302, H01R 13/66

(54) **CHARGING DOCK DETECTION ASSEMBLY, CHARGING DOCK AND METHOD FOR ASSEMBLING CHARGING DOCK**

(30) Priority: 02.04.2025 CN 202510413248
(71) Applicant: Tyco Electronics (Shanghai) Co., Ltd., Pilot Free Trade Zone Shanghai 200131 (CN); Tyco Electronics Technology (SIP) Co., Ltd., Suzhou 215126 (CN)
(72) Inventor: Zhang, Jiachen, Suzhou, 32 215123 (CN); Zhu, Fangyue, Shanghai, 200233 (CN); Xia, Leilei, Shanghai, 200233 (CN); Hu, Yuanlu, Suzhou, 32 215123 (CN)
(74) Representative: Grünecker Patent- und Rechtsanwälte PartG mbB

(57) **Abstract**

The present invention discloses a charging dock detection assembly, a charging dock, and a method for assembling the charging dock. The charging dock detection assembly comprises: a terminal locking component (2), comprising a locking plate (20) and an end cap (21) located at one end of the locking plate (20); and a terminal detection module (1) which is assembled onto the locking plate (20) of the terminal locking component (2). The charging dock detection assembly (100) is suitable for insertion into an insertion slot (31) of a charging dock housing (3), the terminal detection module (1) is used to detect the temperature of a power terminal (41) and an electrical signal of a signal terminal (42) of the charging dock, the locking plate (20) is used to lock the power terminal (41) and the signal terminal (42) in the charging dock housing (3), and the end cap (21) is used to cover an inlet of the insertion slot (31). In the present invention, the charging dock detection assembly has a simple structure, small volume, and can be easily inserted into the charging dock housing. Therefore, the present invention simplifies the structure of the charging dock, reduces the number of components of the charging dock, improves the assembly efficiency of the charging dock, reduces the assembly difficulty and manufacturing cost of the charging dock.

## Description

### CROSS-REFERENCE TO RELATED APPLICATION

This application claims the benefit of Chinese Patent Application No. CN202510413248.9 filed on April 2, 2025 in the State Intellectual Property Office of China, the whole disclosure of which is incorporated herein by reference.

### BACKGROUND OF THE INVENTION

### Field of the Invention

The present invention relates to a charging dock detection assembly, a charging dock comprising the charging dock detection assembly, and a method for assembling the charging dock.

### Description of the Related Art

In the prior art, in order to charge the battery pack of new energy electric vehicles, it is necessary to install a charging dock suitable for mating with a charging gun on the new energy electric vehicle. In order to improve charging speed, it is necessary to increase the charging current. Currently, the charging current is as high as 600A, and it may even increase to 1000A in the future. When a large current flows through the power terminals inside the charging dock, a large amount of heat is generated, which can cause the temperature of the power terminals inside the charging dock to rise sharply. If the temperature rise cannot be controlled in time, it can lead to safety accidents, such as burning the charging dock or other electrical equipment. In the prior art, in order to control the temperature rise of power terminals, a lead frame is usually installed in the charging dock and a temperature terminal detection module is integrated on the lead frame. The temperature terminal detection module includes a temperature sensor and a thermal pad wrapped around the outside of the temperature sensor. The thermal pad is in thermal contact with the power terminal, and the temperature sensor is electrically connected to the lead frame. In addition, in the prior art, in order to detect the electrical signal of the signal terminal of the charging dock, it is necessary to install elastic terminals on the lead frame for electrical contact with the signal terminal.

In the prior art, the lead frame has a large volume and needs to be pre-installed in the charging dock housing, which is very inconvenient to use. In addition, in the prior art, in order to facilitate the installation of lead frame, the charging dock housing needs to adopt a split design. The existing charging dock housing usually includes a housing body and a housing back cover assembled to the rear port of the housing body. This not only leads to a complex structure of the charging dock housing, but also requires the addition of waterproof sealing rings.

In the prior art, in order to lock the terminal in the charging dock housing, a locking part needs to be set on the lead frame, which can rotate relative to the charging dock housing between a locking position of locking the terminal and a unlocking position of unlocking the terminal. This will make the lead frame and the charging dock housing more complex, assembly more difficult, and cost higher.

In the prior art, in order to ensure reliable thermal contact between the thermal pad and the power terminal, the thermal pad is interference fit with the power terminal. This causes the power terminal to rub against the thermal pad when plugging in and out, which may damage the thermal pad. In addition, in the prior art, the part where the power terminal contacts the thermal pad is spaced apart from the welding end of the power terminal by a predetermined distance in the axial direction, which increases the axial length of the power terminal and cannot detect the temperature of the welding end of the power terminal in a timely and accurate manner.

### SUMMARY OF THE INVENTION

The present invention has been made to overcome or alleviate at least one aspect of the above mentioned disadvantages.

According to an aspect of the present invention, there is provided a charging dock detection assembly. The charging dock detection assembly comprises: a terminal locking component, comprising a locking plate and an end cap located at one end of the locking plate; and a terminal detection module which is assembled onto the locking plate of the terminal locking component. The charging dock detection assembly is suitable for insertion into an insertion slot of a charging dock housing, the terminal detection module is used to detect the temperature of a power terminal and an electrical signal of a signal terminal of the charging dock, the locking plate is used to lock the power terminal and the signal terminal in the charging dock housing, and the end cap is used to cover an inlet of the insertion slot.

According to an exemplary embodiment of the present invention, the terminal locking component is an integral injection molded part.

According to another exemplary embodiment of the present invention, the charging dock detection assembly further comprises a sealing ring which is fitted onto the peripheral wall of the end cap, the sealing ring is adapted to be compressed between the inner peripheral surface of the inlet of the insertion slot and the outer peripheral surface of the peripheral wall of the end cap to achieve sealing between the two.

According to another exemplary embodiment of the present invention, a sealing ring installation groove is formed on the outer peripheral surface of the peripheral wall of the end cap, and the sealing ring is installed in the sealing ring installation groove; the end cap has a cover plate connected to one end of its peripheral wall, and the cover plate is adapted to cover the outside of the inlet of the insertion slot.

According to another exemplary embodiment of the present invention, the terminal detection module comprises: a circuit board which is assembled onto the top surface of the locking plate; a thermal pad installed on the circuit board; and a temperature sensor installed on the circuit board and located in the thermal pad. The thermal pad is used for thermal contact with the power terminal of the charging dock to transfer the heat of the power terminal to the temperature sensor, which is used to detect the temperature of the power terminal.

According to another exemplary embodiment of the present invention, the circuit board is fixed to the locking plate in a snap fit manner, allowing the terminal detection module and the terminal locking component to be assembled together in a detachable manner.

According to another exemplary embodiment of the present invention, an elastic buckle is formed on the top surface of the locking plate, and an engagement hole is formed in the circuit board, the elastic buckle passes through the engagement hole and engages with the circuit board to lock the circuit board onto the locking plate.

According to another exemplary embodiment of the present invention, a positioning recess is formed on the top surface of the locking plate, and the thermal pad is positioned in the positioning recess; a power terminal through-hole is formed in the locking plate, and the power terminal through-hole is communicated with one side of the positioning recess, so that the thermal pad can make thermal contact with the power terminal passing through the power terminal through-hole.

According to another exemplary embodiment of the present invention, the terminal detection module comprises multiple thermal pads and multiple temperature sensors respectively arranged in the multiple thermal pads, the multiple thermal pads are used to respectively make thermal contact with the multiple power terminals of the charging dock, and the multiple temperature sensors are used to respectively detect the temperature of the multiple power terminals.

According to another exemplary embodiment of the present invention, a tongue part is formed on the circuit board, and the temperature sensor is soldered to the tongue part; the temperature sensor and the tongue part are inserted into the thermal pad, and the thermal pad is interference fit with the temperature sensor to ensure reliable thermal contact with the temperature sensor.

According to another exemplary embodiment of the present invention, the terminal detection module further comprises an elastic contact member installed on the circuit board, the elastic contact member is used to make electrical contact with the signal terminal of the charging dock to detect the electrical signal of the signal terminal.

According to another exemplary embodiment of the present invention, a signal terminal through-hole is formed in the locking plate, and the elastic contact member includes a fixing part fixed to the circuit board and a pair of elastic arms for clamping the signal terminal passing through the signal terminal through-hole.

According to another exemplary embodiment of the present invention, the terminal detection module comprises multiple elastic contact members, which are used to respectively make electrical contact with multiple signal terminals of the charging dock.

According to another exemplary embodiment of the present invention, the terminal detection module further comprises multiple pins installed on the circuit board, the temperature sensor and the elastic contact member are respectively electrically connected to corresponding pins via conductive traces on the circuit board, and the multiple pins are used for electrical connection with a connector inserted into the charging dock housing.

According to another exemplary embodiment of the present invention, the charging dock detection assembly is adapted to be moved relative to the charging dock housing between a pre-installed position and a final installed position; when the charging dock detection assembly is in the pre-installed position, the locking plate is in a position that does not interfere with the power terminal and signal terminal of the charging dock, allowing the power terminal and signal terminal to be inserted into the charging dock housing; when the charging dock detection assembly is moved to the final installed position, the locking plate is adapted to rest against the step parts of the power terminal and the signal terminal to lock the power terminal and the signal terminal in the charging dock housing.

According to another exemplary embodiment of the present invention, the end cap of the terminal locking component has an elastic buckle connected to its cover plate, and a first snap slot and a second snap slot are formed on the elastic buckle; when the charging dock detection assembly is in the pre-installed position, the first snap slot of the elastic buckle engages with the second protrusion on the outer side of the charging dock housing to hold the charging dock detection assembly in the pre-installed position; when the charging dock detection assembly is moved to the final installed position, the first snap slot and second snap slot of the elastic buckle respectively engage with the first protrusion and second protrusion on the outer side of the charging dock housing to keep the charging dock detection assembly in the final installed position;

According to another exemplary embodiment of the present invention, multiple locking protrusions are formed on the peripheral wall of the end cap of the terminal locking component, and the multiple locking protrusions are spaced apart in the circumferential direction of the end cap of the terminal locking component; when the charging dock detection assembly is moved to the final installed position, the multiple locking protrusions respectively engage with multiple locking slots on the charging dock housing to lock the charging dock detection assembly in the final installed position.

According to another exemplary embodiment of the present invention, multiple locking parts respectively corresponding the power terminals and signal terminals of the charging dock are formed on the locking plate of the terminal locking component; when the charging dock detection assembly is moved to the final installed position, the multiple locking parts respectively rest on the step parts of the power terminals and signal terminals of the charging dock.

According to another aspect of the present invention, there is provided a charging dock. The charging dock comprises: a charging dock housing which is formed with multiple terminal sockets and an insertion slot communicated with the multiple terminal sockets; multiple terminals which are respectively inserted into the multiple terminal sockets and include a power terminal for transmitting charging current and a signal terminal for transmitting signals; and the above charging dock detection assembly inserted into the insertion slot of the charging dock housing, the terminal detection module is used to detect the temperature of the power terminal and the electrical signal of the signal terminal, the locking plate is used to lock the multiple terminals in the charging dock housing, and the end cap is used to cover the inlet of the insertion slot.

According to an exemplary embodiment of the present invention, the charging dock detection assembly can be moved relative to the charging dock housing between a pre-installed position and a final installed position; when the charging dock detection assembly is in the pre-installed position, the locking plate is in a position that does not interfere with the multiple terminals to allow the multiple terminals to be inserted into the charging dock housing; when the charging dock detection assembly is moved to the final installed position, the locking plate is adapted to rest against the step parts of the multiple terminals to lock the multiple terminals in the charging dock housing.

According to another exemplary embodiment of the present invention, a first protrusion and a second protrusion are formed on the outer side of the peripheral wall of the inlet of the insertion slot of the charging dock housing; when the charging dock detection assembly is in the pre-installed position, the second protrusion engages with the first snap slot of the elastic buckle of the terminal locking component to hold the charging dock detection assembly in the pre-installed position; when the charging dock detection assembly is moved to the final installed position, the first protrusion and the second protrusion are respectively engaged with the first snap slot and the second snap slot of the elastic buckle to hold the charging dock detection assembly in the final installed position.

According to another exemplary embodiment of the present invention, multiple locking slots are formed on the peripheral wall of the inlet of the insertion slot of the charging dock housing, and the multiple locking slots are distributed at intervals in the circumferential direction of the inlet of the insertion slot; when the charging dock detection assembly is moved to the final installed position, the multiple locking protrusions of the terminal locking component are respectively engaged with the multiple locking slots to lock the charging dock detection assembly in the final installed position.

According to another exemplary embodiment of the present invention, the insertion slot extends along the radial direction of the terminal socket, and a connector insertion port communicated with the insertion slot is also formed in the charging dock housing, the connector insertion port extends along the axial direction of the terminal socket; when the charging dock detection assembly is moved to the final installed position, multiple pins of the terminal detection module are located in the connector insertion port to electrically connect with a connector inserted into the connector insertion port.

According to another exemplary embodiment of the present invention, when the charging dock detection assembly is in the pre-installed position, the thermal pad is in a position that is not in contact with the power terminal to prevent friction between the power terminal and the thermal pad during insertion and removal of the power terminal; when the charging dock detection assembly is moved to the final installed position, the thermal pad is suitable for interference fit with and reliable thermal contact with the power terminal inserted into the charging dock housing.

According to another exemplary embodiment of the present invention, the power terminal has a mating end for mating with a mating power terminal of a charging gun and a welding end for welding to a power cable; when the charging dock detection assembly is moved to the final installed position, the thermal pad comes into thermal contact with the welding end of the power terminal, and the temperature sensor is used to detect the temperature of the welding end of the power terminal.

According to another exemplary embodiment of the present invention, the welding end of the power terminal is flat and has a first side and a second side that are opposite in thickness; the power cable is suitable for welding to the first side of the welding end of the power terminal, and the thermal pad is suitable for thermal contact with the second side of the welding end of the power terminal.

According to another aspect of the present invention, there is provided a method for assembling the above charging dock, it comprises the following steps of:
pre installing the charging dock detection assembly into the insertion slot of the charging dock housing, so that the charging dock detection assembly is in the pre-installed position;
inserting the multiple terminals of the charging dock into the multiple terminal sockets of the charging dock housing respectively; and
pushing the charging dock detection assembly from the pre-installed position to the final installed position to lock the multiple terminals in the charging dock housing.

In the aforementioned exemplary embodiments according to the present invention, the charging dock detection assembly has a simple structure, small volume, and can be conveniently inserted into the charging dock housing. Therefore, the present invention simplifies the structure of the charging dock, reduces the number of components of the charging dock, improves the assembly efficiency of the charging dock, reduces the assembly difficulty and manufacturing cost of the charging dock.

In the aforementioned exemplary embodiments according to the present invention, when inserting and removing the power terminal of the charging dock, the charging dock detection assembly is in the pre-installed position, and the thermal pad is not in contact with the power terminal, thereby preventing the thermal pad from being worn by the power terminal.

In the aforementioned exemplary embodiments according to the present invention, the thermal pad is in thermal contact with the welding part of the power terminal, thereby reducing the axial length of the power terminal and more accurately detecting the temperature of the power terminal.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative exploded view of a charging dock according to an exemplary embodiment of the present invention, wherein the charging dock detection assembly has not yet been inserted into the charging dock housing;
Figure 2 shows a horizontal sectional view of a charging dock according to an exemplary embodiment of the present invention, wherein the charging dock detection assembly has not yet been inserted into the charging dock housing;
Figure 3 shows an illustrative perspective view of a charging dock according to an exemplary embodiment of the present invention, wherein the charging dock detection assembly is in a pre-installed position;
Figure 4 shows a horizontal sectional view of a charging dock according to an exemplary embodiment of the present invention, wherein the charging dock detection assembly is in a pre-installed position;
Figure 5 shows a vertical sectional view of a charging dock according to an exemplary embodiment of the present invention, wherein the charging dock detection assembly is in a pre-installed position and the power terminal has not yet been inserted into the charging dock housing;
Figure 6 shows a vertical sectional view of a charging dock according to an exemplary embodiment of the present invention, wherein the charging dock detection assembly is in a pre-installed position and the power terminal has been inserted into the charging dock housing;
Figure 7 shows an illustrative perspective view of a charging dock according to an exemplary embodiment of the present invention, wherein the charging dock detection assembly is in the final installed position;
Figure 8 shows a horizontal sectional view of a charging dock according to an exemplary embodiment of the present invention, with the charging dock detection assembly in the final installed position;
Figure 9 shows a vertical sectional view of a charging dock according to an exemplary embodiment of the present invention, with the charging dock detection assembly in the final installed position;
Figure 10 shows an illustrative perspective view of a charging dock detection assembly according to an exemplary embodiment of the present invention;
Figure 11 shows an illustrative exploded view of a charging dock detection assembly according to an exemplary embodiment of the present invention;
Figure 12 shows a longitudinal sectional view of a charging dock detection assembly according to an exemplary embodiment of the present invention;
Figure 13 shows an exploded sectional view of a charging dock detection assembly according to an exemplary embodiment of the present invention;
Figure 14 shows an illustrative perspective view of a charging dock detection assembly according to an exemplary embodiment of the present invention when viewed from the back;
Figure 15 shows an illustrative perspective view of a charging dock detection assembly and multiple terminals of the charging dock according to an exemplary embodiment of the present invention;
Figure 16 shows a longitudinal sectional view of a terminal detection module according to an exemplary embodiment of the present invention; and
Figure 17 shows an illustrative exploded view of a terminal detection module according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a charging dock detection assembly. The charging dock detection assembly comprises: a terminal locking component, comprising a locking plate and an end cap located at one end of the locking plate; and a terminal detection module which is assembled onto the locking plate of the terminal locking component. The charging dock detection assembly is suitable for insertion into an insertion slot of a charging dock housing, the terminal detection module is used to detect the temperature of a power terminal and an electrical signal of a signal terminal of the charging dock, the locking plate is used to lock the power terminal and the signal terminal in the charging dock housing, and the end cap is used to cover an inlet of the insertion slot.

According to another general concept of the present invention, there is provided a charging dock. The charging dock comprises: a charging dock housing which is formed with multiple terminal sockets and an insertion slot communicated with the multiple terminal sockets; multiple terminals which are respectively inserted into the multiple terminal sockets and include a power terminal for transmitting charging current and a signal terminal for transmitting signals; and the above charging dock detection assembly inserted into the insertion slot of the charging dock housing, the terminal detection module is used to detect the temperature of the power terminal and the electrical signal of the signal terminal, the locking plate is used to lock the multiple terminals in the charging dock housing, and the end cap is used to cover the inlet of the insertion slot.

According to another general concept of the present invention, there is provided a method for assembling the above charging dock, it comprises the following steps of: pre installing the charging dock detection assembly into the insertion slot of the charging dock housing, so that the charging dock detection assembly is in the pre-installed position; inserting the multiple terminals of the charging dock into the multiple terminal sockets of the charging dock housing respectively; and pushing the charging dock detection assembly from the pre-installed position to the final installed position to lock the multiple terminals in the charging dock housing.

According to another general concept of the present invention, a charging dock is provided. The charging dock comprises: a charging dock housing formed with multiple terminal sockets and an insertion slot communicated with the multiple terminal sockets; multiple terminals respectively inserted into the multiple terminal sockets, including a power terminal for transmitting charging current; the above charging dock detection assembly inserted into the insertion slot of the charging dock housing and can be moved relative to the charging dock housing between a pre-installed position and a final installed position. The charging dock detection assembly comprises a terminal detection module, which includes a thermal pad for thermal contact with the power terminal and a temperature sensor set in the thermal pad for detecting the temperature of the power terminal. When the charging dock detection assembly is in the pre-installed position, the thermal pad is not in contact with the power terminal to prevent friction between the power terminal and the thermal pad during insertion and removal of the power terminal; When the charging dock detection assembly is moved to the final installed position, the thermal pad and the power terminal inserted into the charging dock housing are interference fit with and reliably in thermal contact.

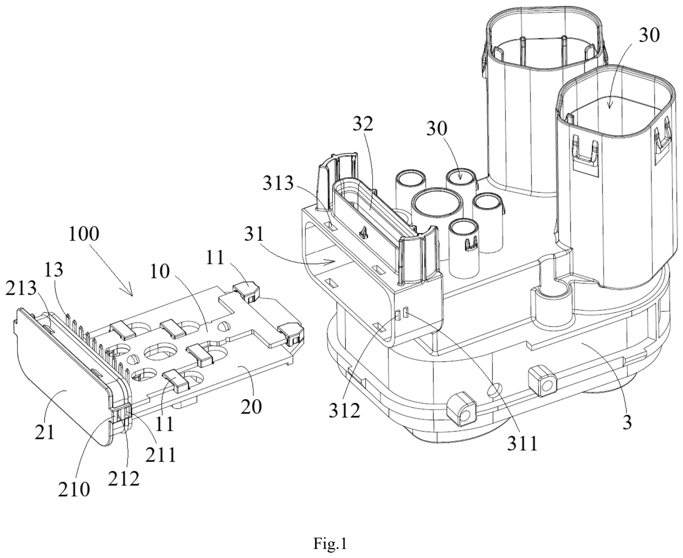

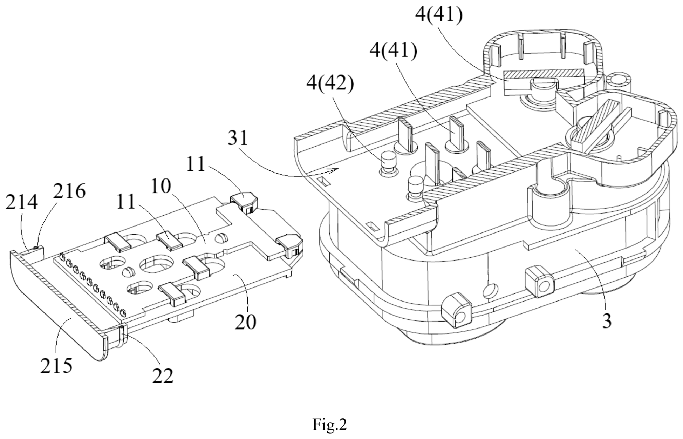

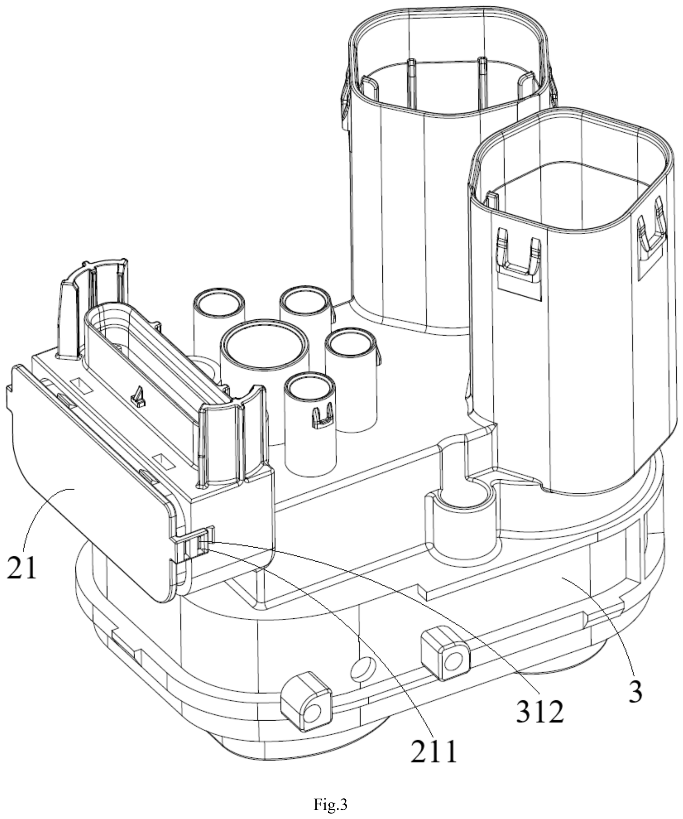

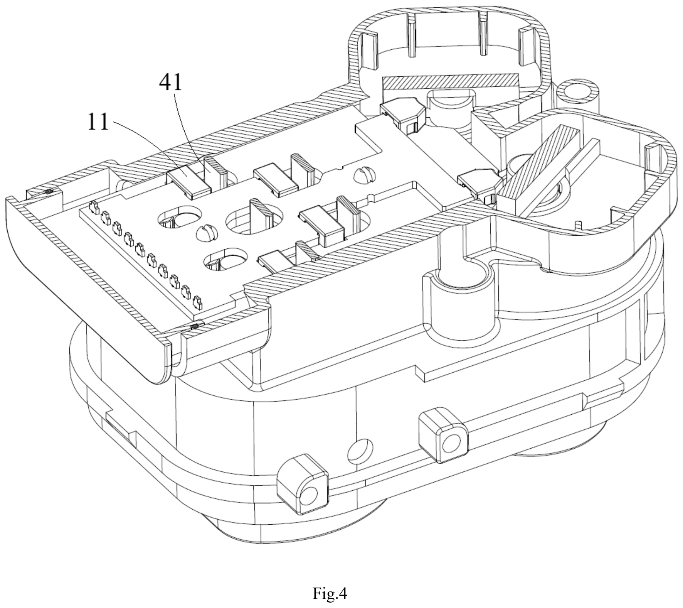

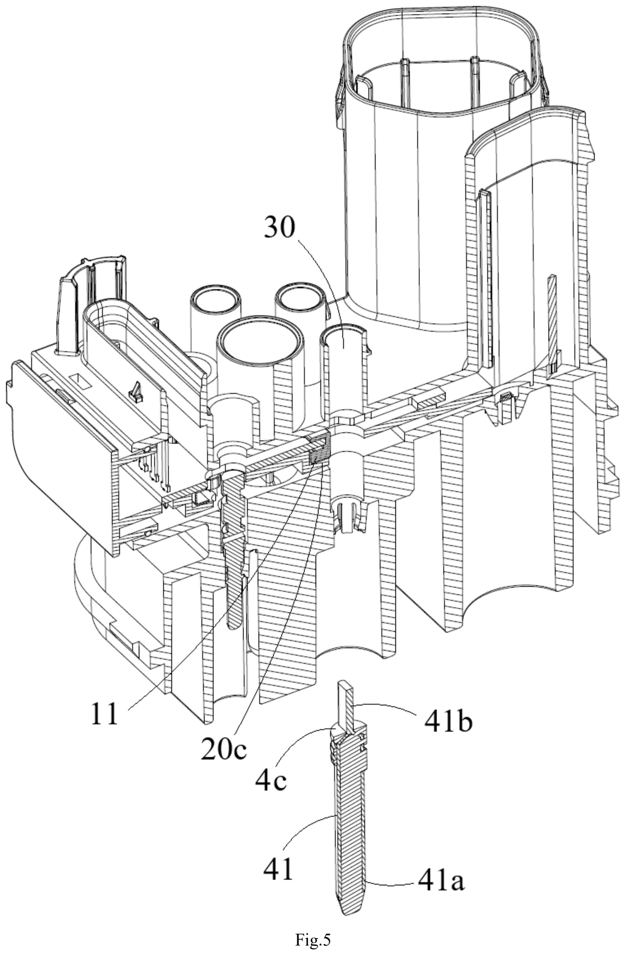

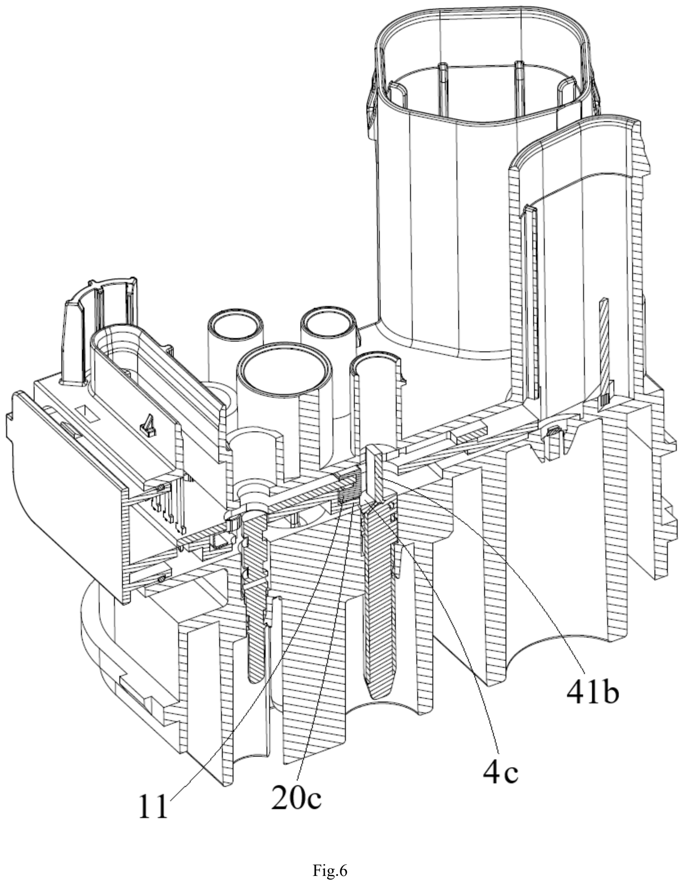

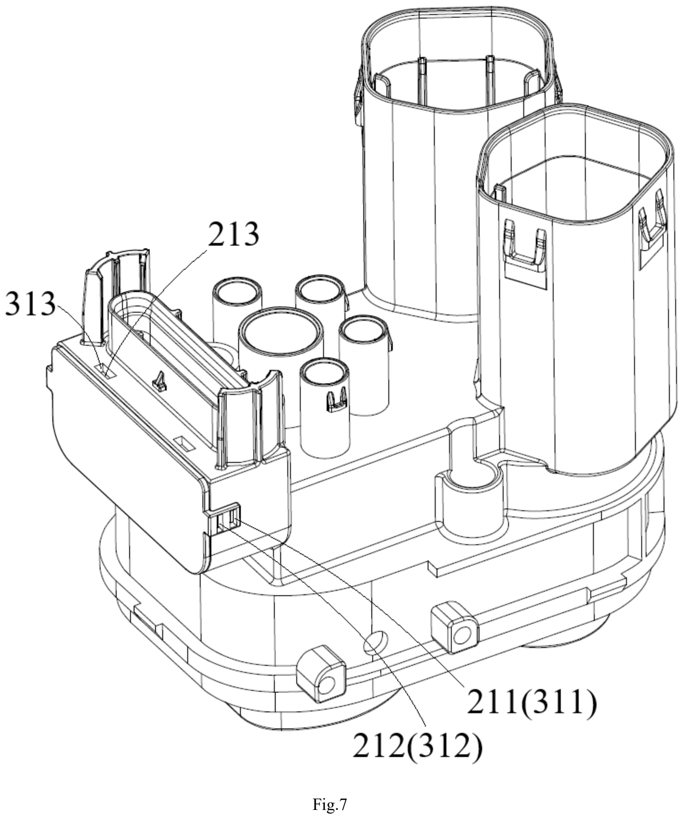

Figure 1 shows an illustrative exploded view of a charging dock according to an exemplary embodiment of the present invention, wherein the charging dock detection assembly 100 has not yet been inserted into the charging dock housing 3; Figure 2 shows a horizontal sectional view of a charging dock according to an exemplary embodiment of the present invention, wherein the charging dock detection assembly 100 has not yet been inserted into the charging dock housing 3; Figure 3 shows an illustrative perspective view of a charging dock according to an exemplary embodiment of the present invention, wherein the charging dock detection assembly 100 is in a pre-installed position; Figure 4 shows a horizontal sectional view of a charging dock according to an exemplary embodiment of the present invention, wherein the charging dock detection assembly 100 is in a pre-installed position; Figure 5 shows a vertical sectional view of a charging dock according to an exemplary embodiment of the present invention, wherein the charging dock detection assembly 100 is in a pre-installed position, and the power terminal 41 has not yet been inserted into the charging dock housing 3; Figure 6 shows a vertical sectional view of a charging dock according to an exemplary embodiment of the present invention, wherein the charging dock detection assembly 100 is in a pre-installed position, and the power terminal 41 has been inserted into the charging dock housing 3; Figure 7 shows an illustrative perspective view of a charging dock according to an exemplary embodiment of the present invention, where the charging dock detection assembly 100 is in the final installed position;

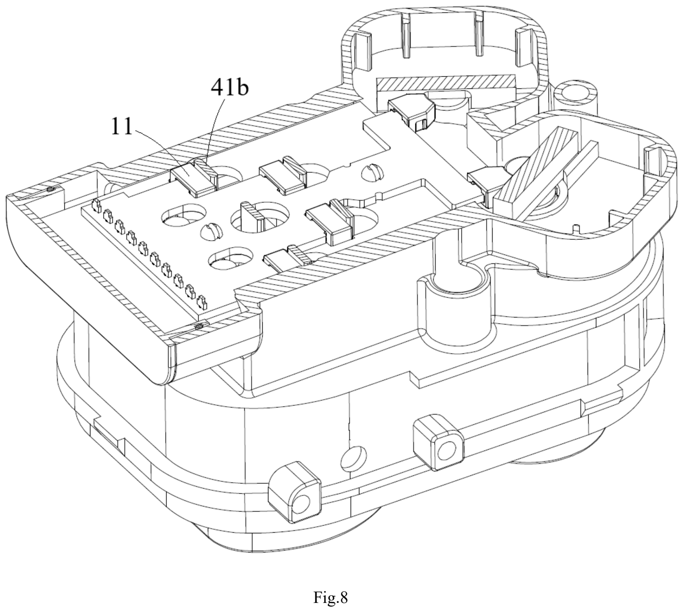

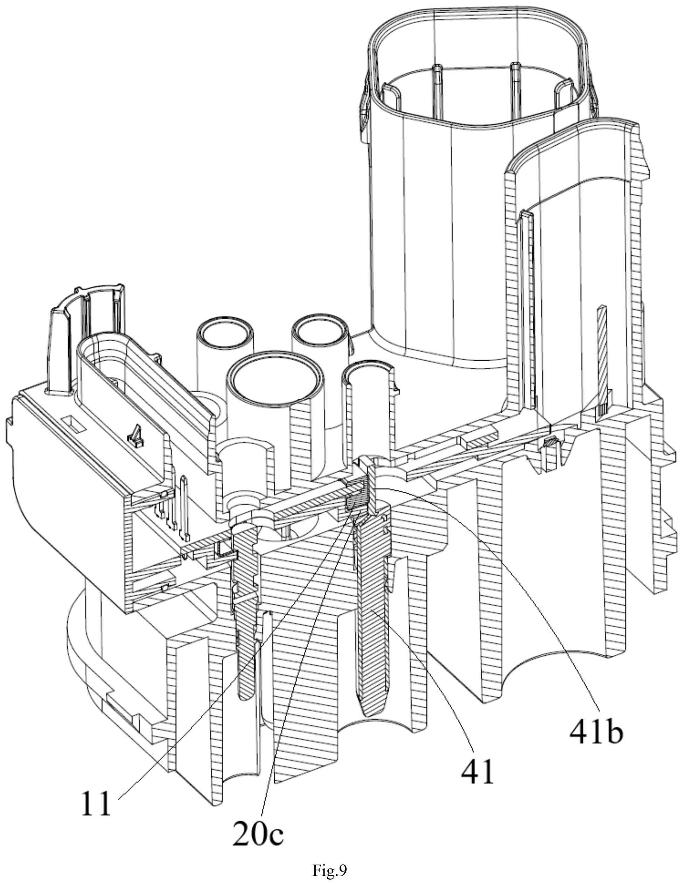

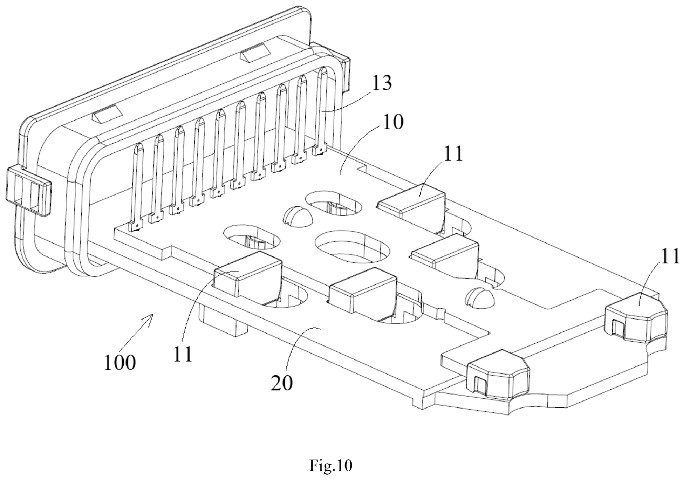

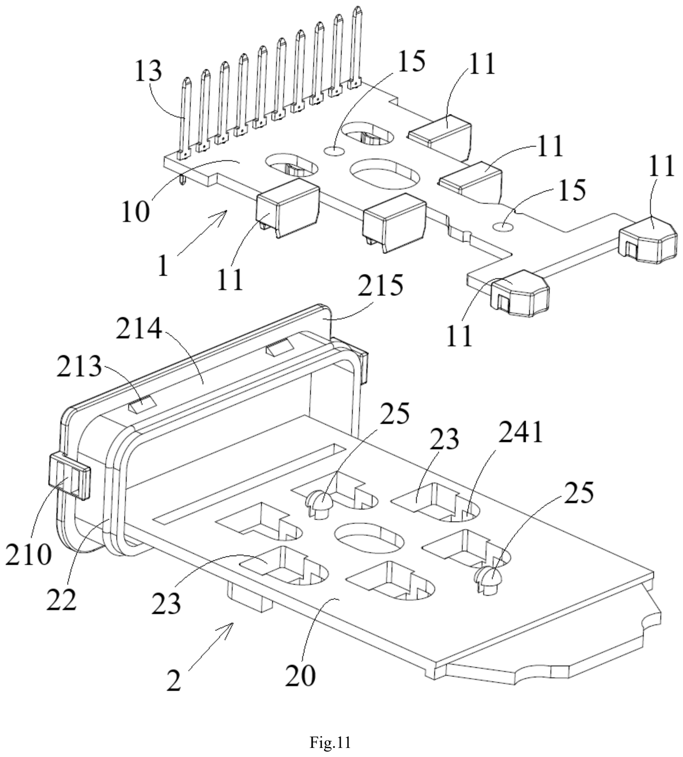

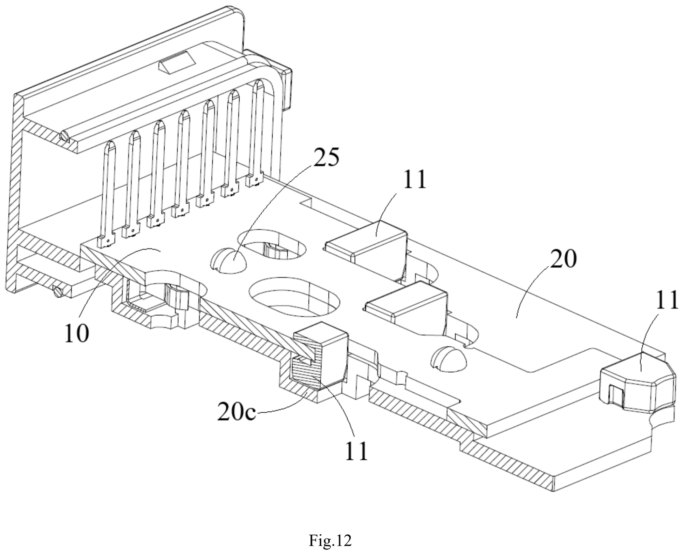

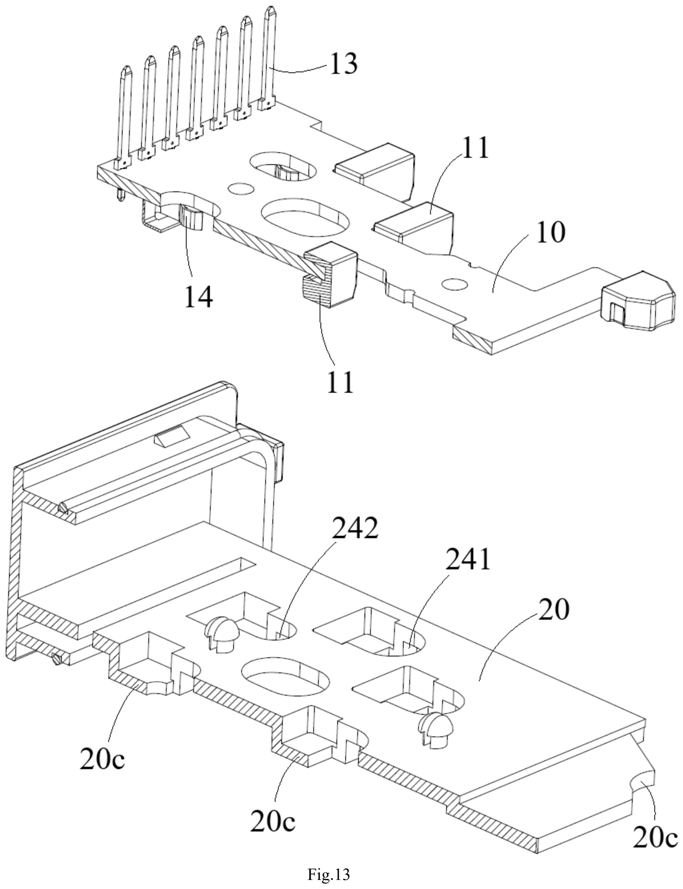

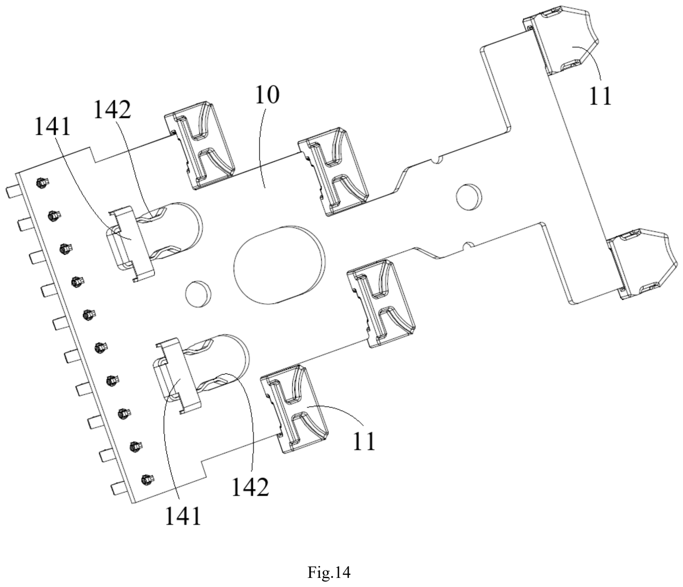

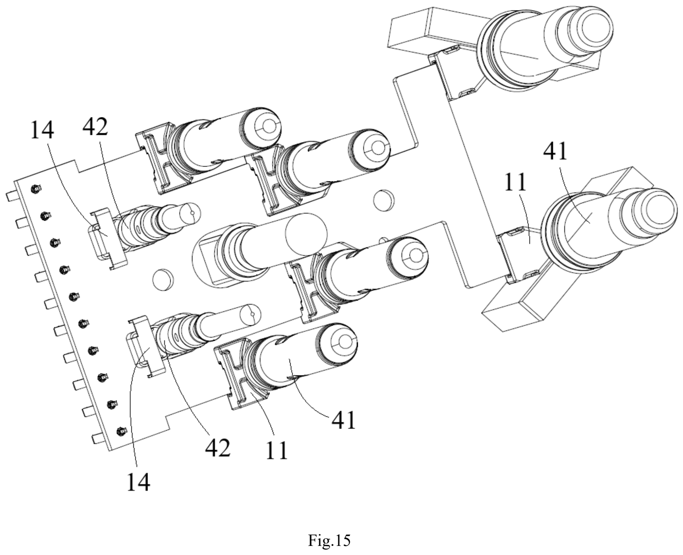

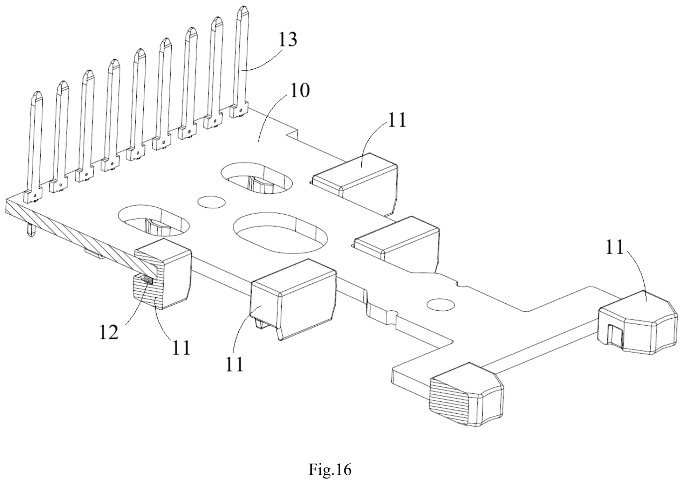

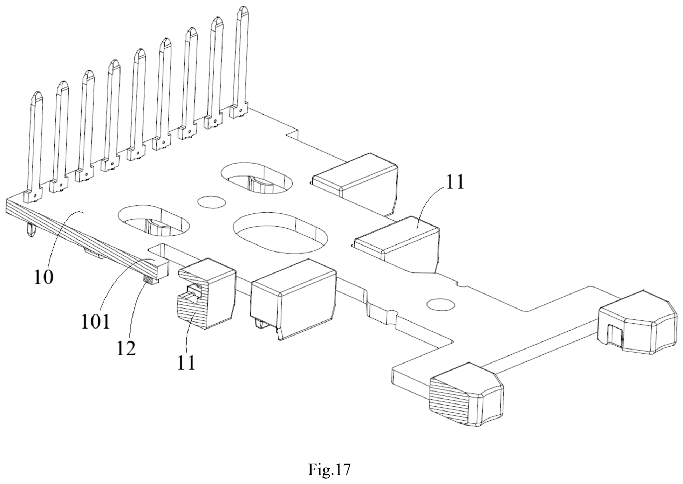

Figure 8 shows a horizontal sectional view of a charging dock according to an exemplary embodiment of the present invention, wherein the charging dock detection assembly 100 is in the final installed position; Figure 9 shows a vertical sectional view of a charging dock according to an exemplary embodiment of the present invention, wherein the charging dock detection assembly 100 is in the final installed position; Figure 10 shows an illustrative perspective view of a charging dock detection assembly 100 according to an exemplary embodiment of the present invention; Figure 11 shows an illustrative exploded view of a charging dock detection assembly 100 according to an exemplary embodiment of the present invention; Figure 12 shows a longitudinal sectional view of a charging dock detection assembly 100 according to an exemplary embodiment of the present invention; Figure 13 shows an exploded sectional view of a charging dock detection assembly 100 according to an exemplary embodiment of the present invention; Figure 14 shows an illustrative perspective view of the charging dock detection assembly 100 according to an exemplary embodiment of the present invention when viewed from the back; Figure 15 shows an illustrative perspective view of a charging dock detection assembly 100 and multiple terminals 4 of the charging dock according to an exemplary embodiment of the present invention; Figure 16 shows a longitudinal sectional view of terminal detection module 1 according to an exemplary embodiment of the present invention; Figure 17 shows an illustrative exploded view of terminal detection module 1 according to an exemplary embodiment of the present invention.

As shown in Figures 1 to 17, in an exemplary embodiment of the present invention, a charging dock detection assembly 100 is disclosed. The charging dock detection assembly 100 includes: a terminal locking component 2 and a terminal detection module 1. The terminal locking component 2 includes a locking plate 20 and an end cap 21 located at one end of the locking plate 20. The terminal detection module 1 is assembled onto the locking plate 20 of the terminal locking component 2. The charging dock detection assembly 100 is suitable for insertion into an insertion slot 31 of a charging dock housing 3. The terminal detection module 1 is used to detect the temperature of a power terminal 41 and the electrical signal of a signal terminal 42 of the charging dock. The locking plate 20 is used to lock the power terminal 41 and the signal terminal 42 in the charging dock housing 3, and the end cap 21 is used to cover the inlet of the insertion slot 31.

As shown in Figures 1 to 17, in the illustrated embodiment, the terminal locking component 2 can be an integral injection molded part. This can reduce manufacturing costs and improve manufacturing efficiency. The terminal locking component 2 is a non-conductive insulation component.

As shown in Figures 1 to 17, in the illustrated embodiment, the charging dock detection assembly 100 further includes a sealing ring 22, which is fitted onto the peripheral wall 214 of the end cap 21. The sealing ring 22 is suitable for being compressed between the inner peripheral surface of the inlet of the insertion slot 31 and the outer peripheral surface of the peripheral wall 214 of the end cap 21 to achieve sealing between the two.

As shown in Figures 1 to 17, in the illustrated embodiment, a sealing ring installation groove 216 is formed on the outer peripheral surface of the peripheral wall 214 of the end cap 21, and the sealing ring 22 is installed in the sealing ring installation groove 216. The end cap 21 has a cover plate 215 connected to one end of its peripheral wall 214, and the cover plate 215 is adapted to cover the outside of the inlet of the insertion slot 31.

As shown in Figures 1 to 17, in the illustrated embodiment, the terminal detection module 1 includes a circuit board 10, a thermal pad 11, and a temperature sensor 12. The circuit board 10 is assembled onto the top surface of locking board 20. The thermal pad 11 is installed onto the circuit board 10. The temperature sensor 12 is installed on the circuit board 10 and located in the thermal pad 11. The thermal pad 11 is used to make thermal contact with the power terminal 41 of the charging dock, in order to transfer the heat of the power terminal 41 to the temperature sensor 12, which is used to detect the temperature of the power terminal 41.

As shown in Figures 1 to 17, in the illustrated embodiment, the circuit board 10 is fixed to the locking plate 20 in a snap fit manner, so that the terminal detection module 1 and the terminal locking component 2 are detachably assembled together.

As shown in Figures 1 to 17, in the illustrated embodiment, an elastic buckle 25 is formed on the top surface of the locking plate 20, and an engagement hole 15 is formed in the circuit board 10. The elastic buckle 25 passes through the engagement hole 15 and engages with the circuit board 10 to lock the circuit board 10 onto the locking plate 20.

As shown in Figures 1 to 17, in the illustrated embodiment, a positioning recess 23 is formed on the top surface of the locking plate 20, and the thermal pad 11 is positioned in the positioning recess 23. A power terminal through-hole 241 is formed in the locking plate 20, which is communicated with one side of the positioning recess 23, allowing the thermal pad 11 to make thermal contact with the power terminal 41 passing through the power terminal through-hole 241.

As shown in Figures 1 to 17, in the illustrated embodiment, the terminal detection module 1 includes multiple thermal pads 11 and multiple temperature sensors 12 respectively arranged in the multiple thermal pads 11. The multiple thermal pads 11 are used to respectively make thermal contact with the multiple power terminals 41 of the charging dock, and the multiple temperature sensors 12 are used to respectively detect the temperature of the multiple power terminals 41.

As shown in Figures 1 to 17, in the illustrated embodiment, a tongue part 101 is formed on the circuit board 10, and the temperature sensor 12 is soldered to the tongue part 101. The temperature sensor 12 and the tongue part 101 are inserted into the thermal pad 11, and the thermal pad 11 is in interference fit with the temperature sensor 12 to ensure reliable thermal contact with the temperature sensor 12.

As shown in Figures 1 to 17, in the illustrated embodiment, the terminal detection module 1 further includes an elastic contact member 14, which is mounted on the circuit board 10. The elastic contact member 14 is used to make electrical contact with the signal terminal 42 of the charging dock to detect the electrical signal of the signal terminal 42.

As shown in Figures 1 to 17, in the illustrated embodiment, a signal terminal through-hole 242 is formed in the locking plate 20, and the elastic contact member 14 includes a fixed part 141 fixed to the circuit board 10 and a pair of elastic arms 142 for clamping the signal terminal 42 passing through the signal terminal through-hole 242.

As shown in Figures 1 to 17, in the illustrated embodiment, the terminal detection module 1 includes multiple elastic contact members 14, which are used to make electrical contact with the multiple signal terminals 42 of the charging dock, respectively.

As shown in Figures 1 to 17, in the illustrated embodiment, the terminal detection module 1 further includes multiple pins 13, which are mounted on the circuit board 10. The temperature sensor 12 and the elastic contact member 14 are respectively electrically connected to the corresponding pins 13 via conductive traces on the circuit board 10. Multiple pins 13 are used to electrically connect with a connector (not shown) inserted into the charging dock housing 3.

As shown in Figures 1 to 17, in the illustrated embodiment, the charging dock detection assembly 100 is adapted to be moved relative to the charging dock housing 3 between a pre-installed position and a final installed position. When the charging dock detection assembly 100 is in the pre-installed position, the locking plate 20 is in a position that does not interfere with the power terminal 41 and signal terminal 42 of the charging dock, allowing the power terminal 41 and signal terminal 42 to be inserted into the charging dock housing 3. When the charging dock detection assembly 100 is moved to the final installed position, the locking plate 20 is adapted to rest against the step parts 4c of the power terminal 41 and the signal terminal 42 to lock the power terminal 41 and the signal terminal 42 in the charging dock housing 3.

As shown in Figures 1 to 17, in the illustrated embodiment, the end cap 21 of the terminal locking component 2 has an elastic buckle 210 connected to its cover plate 215, and a first snap slot 211 and a second snap slot 212 are formed on the elastic buckle 210. When the charging dock detection assembly 100 is in the pre-installed position, the first snap slot 211 of the elastic buckle 210 engages with the second protrusion 312 on the outer side of the charging dock housing 3 to keep the charging dock detection assembly 100 in the pre-installed position. When the charging dock detection assembly 100 is moved to the final installed position, the first snap slot 211 and the second snap slot 212 of the elastic buckle 210 respectively engage with the first protrusion 311 and the second protrusion 312 on the outer side of the charging dock housing 3 to keep the charging dock detection assembly 100 in the final installed position;

As shown in Figures 1 to 17, in the illustrated embodiment, multiple locking protrusions 213 are formed on the peripheral wall 214 of the end cap 21 of the terminal locking component 2, and the multiple locking protrusions 213 are distributed at intervals in the circumferential direction of the end cap 21 of the terminal locking component 2. When the charging dock detection assembly 100 is moved to the final installed position, multiple locking protrusions 213 respectively engage with multiple locking slots 313 on the charging dock housing 3 to lock the charging dock detection assembly 100 in the final installed position.

As shown in Figure 1 to Figure 17, in the illustrated embodiment, multiple locking parts 20c respectively corresponding the power terminals 41 and signal terminals 42 of the charging dock are formed on the locking plate 20 of the terminal locking component 2. When the charging dock detection assembly 100 is moved to the final installed position, the multiple locking parts 20c respectively abut against the step parts 4c of the power terminals 41 and the signal terminals 42 of the charging dock.

As shown in Figures 1 to 17, in another exemplary embodiment of the present invention, a charging dock is also disclosed. The charging dock includes: a charging dock housing 3, multiple terminals 4, and a charging dock detection assembly 100. The charging dock housing 3 is formed with multiple terminal sockets 30 and an insertion slot 31 communicated with the multiple terminal sockets 30. Multiple terminals 4 are respectively inserted into multiple terminal sockets 30, including a power terminal 41 for transmitting charging current and a signal terminal 42 for transmitting signals. The charging dock detection assembly 100 is inserted into the insertion slot 31 of the charging dock housing 3. The terminal detection module 1 is used to detect the temperature of power terminal 41 and the electrical signal of signal terminal 42, the locking plate 20 is used to lock multiple terminals 4 in the charging dock housing 3, and the end cap 21 is used to cover the inlet of slot 31.

As shown in Figures 1 to 17, in the illustrated embodiment, the charging dock detection assembly 100 can be moved relative to the charging dock housing 3 between the pre-installed position and the final installed position. When the charging dock detection assembly 100 is in the pre-installed position, the locking plate 20 is in a position that does not interfere with multiple terminals 4, allowing multiple terminals 4 to be inserted into the charging dock housing 3; When the charging dock detection assembly 100 is moved to the final installed position, the locking plate 20 is adapted to rest against the step parts 4c of the multiple terminals 4 to lock the multiple terminals 4 in the charging dock housing 3.

As shown in Figures 1 to 17, in the illustrated embodiment, a first protrusion 311 and a second protrusion 312 are formed on the outer side of the peripheral wall of the inlet of the insertion slot 31 of the charging dock housing 3. When the charging dock detection assembly 100 is in the pre-installed position, the second protrusion 312 engages with the first snap slot 211 of the elastic buckle 210 of the terminal locking component 2 to hold the charging dock detection assembly 100 in the pre-installed position; When the charging dock detection assembly 100 is moved to the final installed position, the first protrusion 311 and the second protrusion 312 are respectively engaged with the first snap slot 211 and the second snap slot 212 of the elastic buckle 210 to keep the charging dock detection assembly 100 in the final installed position.

As shown in Figures 1 to 17, in the illustrated embodiment, multiple locking slots 313 are formed on the peripheral wall of the inlet of the insertion slot 31 of the charging dock housing 3, and the multiple locking slots 313 are distributed at intervals in the circumferential direction of the inlet of insertion slot 31; When the charging dock detection assembly 100 is moved to the final installed position, the multiple locking protrusions 213 of the terminal locking component 2 are respectively engaged with the multiple locking slots 313 to lock the charging dock detection assembly 100 in the final installed position.

As shown in Figures 1 to 17, in the illustrated embodiment, the insertion slot 31 extends along the radial direction of the terminal socket 30, and a connector insertion port 32 communicated with the insertion slot 31 is also formed in the charging dock housing 3. The connector insertion port 32 extends along the axial direction of the terminal socket 30; When the charging dock detection assembly 100 is moved to the final installed position, the multiple pins 13 of the terminal detection module 1 are located in the connector insertion port 32 to be electrically connected to the connector inserted into the connector insertion port 32.

As shown in Figures 1 to 17, in the illustrated embodiment, when the charging dock detection assembly 100 is in the pre-installed position, the thermal pad 11 is in a position that is not in contact with the power terminal 41 to prevent friction between the power terminal 41 and the thermal pad 11 during insertion and removal of the power terminal 41; When the charging dock detection assembly 100 is moved to the final installed position, the thermal pad 11 is suitable for interference fit with and reliable thermal contact with the power terminal 41 inserted into the charging dock housing 3.

As shown in Figure 1 to Figure 17, in the illustrated embodiment, the power terminal 41 has a mating end 41b for mating with a power terminal of a charging gun and a welding end 41b for welding to a power cable (not shown); when the charging dock detection assembly 100 is moved to the final installed position, the thermal pad 11 comes into thermal contact with the welding end 41b of the power terminal 41, and the temperature sensor 12 is used to detect the temperature of the welding end 41b of the power terminal 41.

As shown in Figures 1 to 17, in the illustrated embodiment, the welding end 41b of the power terminal 41 is flat, with first and second sides opposite in thickness. The power cable is suitable for soldering to the first side of the welding end 41b of the power terminal 41, and the thermal pad 11 is suitable for thermal contact with the second side of the welding end 41b of the power terminal 41.

As shown in Figures 1 to 17, in another exemplary embodiment of the present invention, a method for assembling the aforementioned charging dock is also disclosed. The method includes the following steps of:
S10: Pre installing the charging dock detection assembly 100 into the insertion slot 31 of the charging dock housing 3, so that the charging dock detection assembly 100 is in the pre-installed position;
S20: Inserting the multiple terminals 4 of the charging dock into the multiple terminal sockets 30 of the charging dock housing 3, respectively; and
S30: Pushing the charging dock detection assembly 100 from the pre-installed position to the final installed position to lock multiple terminals 4 in the charging dock housing 3.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A charging dock detection assembly, comprising:
a terminal locking component (2), comprising a locking plate (20) and an end cap (21) located at one end of the locking plate (20); and
a terminal detection module (1) which is assembled onto the locking plate (20) of the terminal locking component (2),
wherein the charging dock detection assembly (100) is suitable for insertion into an insertion slot (31) of a charging dock housing (3), the terminal detection module (1) is used to detect the temperature of a power terminal (41) and an electrical signal of a signal terminal (42) of the charging dock, the locking plate (20) is used to lock the power terminal (41) and the signal terminal (42) in the charging dock housing (3), and the end cap (21) is used to cover an inlet of the insertion slot (31).

2. The charging dock detection assembly according to claim 1, wherein the terminal locking component (2) is an integral injection molded part.

3. The charging dock detection assembly according to claim 1, further comprising:
a sealing ring (22) which is fitted onto the peripheral wall (214) of the end cap (21),
wherein the sealing ring (22) is adapted to be compressed between the inner peripheral surface of the inlet of the insertion slot (31) and the outer peripheral surface of the peripheral wall (214) of the end cap (21) to achieve sealing between the two,
wherein optionally a sealing ring installation groove (216) is formed on the outer peripheral surface of the peripheral wall (214) of the end cap (21), and the sealing ring (22) is installed in the sealing ring installation groove (216);
wherein optionally the end cap (21) has a cover plate (215) connected to one end of its peripheral wall (214), and the cover plate (215) is adapted to cover the outside of the inlet of the insertion slot (31).

4. The charging dock detection assembly according to claim 1,
wherein the terminal detection module (1) comprises:
a circuit board (10) which is assembled onto the top surface of the locking plate (20);
a thermal pad (11) installed on the circuit board (10); and
a temperature sensor (12) installed on the circuit board (10) and located in the thermal pad (11),
wherein the thermal pad (11) is used for thermal contact with the power terminal (41) of the charging dock to transfer the heat of the power terminal (41) to the temperature sensor (12), which is used to detect the temperature of the power terminal (41).

5. The charging dock detection assembly according to claim 4,
wherein the circuit board (10) is fixed to the locking plate (20) in a snap fit manner, allowing the terminal detection module (1) and the terminal locking component (2) to be assembled together in a detachable manner,
wherein optionally an elastic buckle (25) is formed on the top surface of the locking plate (20), and an engagement hole (15) is formed in the circuit board (10), the elastic buckle (25) passes through the engagement hole (15) and engages with the circuit board (10) to lock the circuit board (10) onto the locking plate (20).

6. The charging dock detection assembly according to claim 4,
wherein a positioning recess (23) is formed on the top surface of the locking plate (20), and the thermal pad (11) is positioned in the positioning recess (23);
wherein a power terminal through-hole (241) is formed in the locking plate (20), and the power terminal through-hole (241) is communicated with one side of the positioning recess (23), so that the thermal pad (11) can make thermal contact with the power terminal (41) passing through the power terminal through-hole (241),
and/or,
wherein the terminal detection module (1) comprises multiple thermal pads (11) and multiple temperature sensors (12) respectively arranged in the multiple thermal pads (11), the multiple thermal pads (11) are used to respectively make thermal contact with the multiple power terminals (41) of the charging dock, and the multiple temperature sensors (12) are used to respectively detect the temperature of the multiple power terminals (41),
and/or,
wherein a tongue part (101) is formed on the circuit board (10), and the temperature sensor (12) is soldered to the tongue part (101);
wherein the temperature sensor (12) and the tongue part (101) are inserted into the thermal pad (11), and the thermal pad (11) is interference fit with the temperature sensor (12) to ensure reliable thermal contact with the temperature sensor (12).

7. The charging dock detection assembly according to claim 4,
wherein the terminal detection module (1) further comprises:
an elastic contact member (14) installed on the circuit board (10),
wherein the elastic contact member (14) is used to make electrical contact with the signal terminal (42) of the charging dock to detect the electrical signal of the signal terminal (42),
wherein optionally a signal terminal through-hole (242) is formed in the locking plate (20), and the elastic contact member (14) includes a fixing part (141) fixed to the circuit board (10) and a pair of elastic arms (142) for clamping the signal terminal (42) passing through the signal terminal through-hole (242),
and/or,
wherein optionally the terminal detection module (1) comprises multiple elastic contact members (14), which are used to respectively make electrical contact with multiple signal terminals (42) of the charging dock,
and/or,
wherein optionally the terminal detection module (1) further comprises:
multiple pins (13) installed on the circuit board (10),
wherein optionally the temperature sensor (12) and the elastic contact member (14) are respectively electrically connected to corresponding pins (13) via conductive traces on the circuit board (10), and the multiple pins (13) are used for electrical connection with a connector inserted into the charging dock housing (3).

8. The charging dock detection assembly according to any one of claims 1-7,
wherein the charging dock detection assembly (100) is adapted to be moved relative to the charging dock housing (3) between a pre-installed position and a final installed position;
wherein when the charging dock detection assembly (100) is in the pre-installed position, the locking plate (20) is in a position that does not interfere with the power terminal (41) and signal terminal (42) of the charging dock, allowing the power terminal (41) and signal terminal (42) to be inserted into the charging dock housing (3);
wherein when the charging dock detection assembly (100) is moved to the final installed position, the locking plate (20) is adapted to rest against the step parts (4c) of the power terminal (41) and the signal terminal (42) to lock the power terminal (41) and the signal terminal (42) in the charging dock housing (3).

9. The charging dock detection assembly according to claim 8,
wherein the end cap (21) of the terminal locking component (2) has an elastic buckle (210) connected to its cover plate (215), and a first snap slot (211) and a second snap slot (212) are formed on the elastic buckle (210);
wherein when the charging dock detection assembly (100) is in the pre-installed position, the first snap slot (211) of the elastic buckle (210) engages with the second protrusion (312) on the outer side of the charging dock housing (3) to hold the charging dock detection assembly (100) in the pre-installed position;
wherein when the charging dock detection assembly (100) is moved to the final installed position, the first snap slot (211) and second snap slot (212) of the elastic buckle (210) respectively engage with the first protrusion (311) and second protrusion (312) on the outer side of the charging dock housing (3) to keep the charging dock detection assembly (100) in the final installed position;
and/or,
wherein multiple locking protrusions (213) are formed on the peripheral wall (214) of the end cap (21) of the terminal locking component (2), and the multiple locking protrusions (213) are spaced apart in the circumferential direction of the end cap (21) of the terminal locking component (2);
wherein when the charging dock detection assembly (100) is moved to the final installed position, the multiple locking protrusions (213) respectively engage with multiple locking slots (313) on the charging dock housing (3) to lock the charging dock detection assembly (100) in the final installed position,
and/or,
wherein multiple locking parts (20c) respectively corresponding the power terminals (41) and signal terminals (42) of the charging dock are formed on the locking plate (20) of the terminal locking component (2);
wherein when the charging dock detection assembly (100) is moved to the final installed position, the multiple locking parts (20c) respectively rest on the step parts (4c) of the power terminals (41) and signal terminals (42) of the charging dock.

10. A charging dock, comprising:
a charging dock housing (3) which is formed with multiple terminal sockets (30) and an insertion slot (31) communicated with the multiple terminal sockets (30);
multiple terminals (4) which are respectively inserted into the multiple terminal sockets (30) and include a power terminal (41) for transmitting charging current and a signal terminal (42) for transmitting signals; and
the charging dock detection assembly (100) according to any one of claims 1-18, which is inserted into the insertion slot (31) of the charging dock housing (3),
wherein the terminal detection module (1) is used to detect the temperature of the power terminal (41) and the electrical signal of the signal terminal (42), the locking plate (20) is used to lock the multiple terminals (4) in the charging dock housing (3), and the end cap (21) is used to cover the inlet of the insertion slot (31).

11. The charging dock according to claim 10,
wherein the charging dock detection assembly (100) can be moved relative to the charging dock housing (3) between a pre-installed position and a final installed position;
wherein when the charging dock detection assembly (100) is in the pre-installed position, the locking plate (20) is in a position that does not interfere with the multiple terminals (4) to allow the multiple terminals (4) to be inserted into the charging dock housing (3);
wherein when the charging dock detection assembly (100) is moved to the final installed position, the locking plate (20) is adapted to rest against the step parts (4c) of the multiple terminals (4) to lock the multiple terminals (4) in the charging dock housing (3).

12. The charging dock according to claim 11,
wherein a first protrusion (311) and a second protrusion (312) are formed on the outer side of the peripheral wall of the inlet of the insertion slot (31) of the charging dock housing (3);
wherein when the charging dock detection assembly (100) is in the pre-installed position, the second protrusion (312) engages with the first snap slot (211) of the elastic buckle (210) of the terminal locking component (2) to hold the charging dock detection assembly (100) in the pre-installed position;
wherein when the charging dock detection assembly (100) is moved to the final installed position, the first protrusion (311) and the second protrusion (312) are respectively engaged with the first snap slot (211) and the second snap slot (212) of the elastic buckle (210) to hold the charging dock detection assembly (100) in the final installed position,
and/or,
wherein multiple locking slots (313) are formed on the peripheral wall of the inlet of the insertion slot (31) of the charging dock housing (3), and the multiple locking slots (313) are distributed at intervals in the circumferential direction of the inlet of the insertion slot (31);
wherein when the charging dock detection assembly (100) is moved to the final installed position, the multiple locking protrusions (213) of the terminal locking component (2) are respectively engaged with the multiple locking slots (313) to lock the charging dock detection assembly (100) in the final installed position,
and/or,
wherein the insertion slot (31) extends along the radial direction of the terminal socket (30), and a connector insertion port (32) communicated with the insertion slot (31) is also formed in the charging dock housing (3), the connector insertion port (32) extends along the axial direction of the terminal socket (30);
wherein when the charging dock detection assembly (100) is moved to the final installed position, multiple pins (13) of the terminal detection module (1) are located in the connector insertion port (32) to electrically connect with a connector inserted into the connector insertion port (32).

13. The charging dock according to any one of claims 10-12,
wherein when the charging dock detection assembly (100) is in the pre-installed position, the thermal pad (11) is in a position that is not in contact with the power terminal (41) to prevent friction between the power terminal (41) and the thermal pad (11) during insertion and removal of the power terminal (41);
wherein when the charging dock detection assembly (100) is moved to the final installed position, the thermal pad (11) is suitable for interference fit with and reliable thermal contact with the power terminal (41) inserted into the charging dock housing (3).

14. The charging dock according to claim 13,
wherein the power terminal (41) has a mating end (41a) for mating with a mating power terminal of a charging gun and a welding end (41b) for welding to a power cable;
wherein when the charging dock detection assembly (100) is moved to the final installed position, the thermal pad (11) comes into thermal contact with the welding end (41b) of the power terminal (41), and the temperature sensor (12) is used to detect the temperature of the welding end (41b) of the power terminal (41),
wherein optionally the welding end (41b) of the power terminal (41) is flat and has a first side and a second side that are opposite in thickness;
wherein optionally the power cable is suitable for welding to the first side of the welding end (41b) of the power terminal (41), and the thermal pad (11) is suitable for thermal contact with the second side of the welding end (41b) of the power terminal (41).

15. A method for assembling the charging dock according to any one of claims 10-14, wherein it comprises the following steps of:
pre installing the charging dock detection assembly (100) into the insertion slot (31) of the charging dock housing (3), so that the charging dock detection assembly (100) is in the pre-installed position;
inserting the multiple terminals (4) of the charging dock into the multiple terminal sockets (30) of the charging dock housing (3) respectively; and
pushing the charging dock detection assembly (100) from the pre-installed position to the final installed position to lock the multiple terminals (4) in the charging dock housing (3).
